# EUROPÄISCHE PATENTSCHRIFT

(11) **EP 3 781 731 B1**
(45) Veröffentlichungstag und Bekanntmachung des Hinweises auf die Patenterteilung: **11.12.2024**
(21) Anmeldenummer: 19723640.9
(22) Anmeldetag: 17.04.2019
(51) Int. Cl.: C25F 7/00, C25F 3/14

(54) **KLEBE-FÜGEVORRICHTUNG SOWIE KLEBE-FÜGEVERFAHREN FÜR EINE METALLISCHE OBERFLÄCHE**
ADHESIVE JOINING DEVICE AND ADHESIVE JOINING METHOD FOR A METAL SURFACE
DISPOSITIF D'ASSEMBLAGE PAR COLLAGE ET PROCÉDÉ D'ASSEMBLAGE PAR COLLAGE D'UNE SURFACE MÉTALLIQUE

(30) Priorität: 20.04.2018 DE 102018109531
(43) Veröffentlichungstag der Anmeldung: 24.02.2021
(73) Patentinhaber: nascit GmbH, 24118 Kiel (DE)
(72) Erfinder: BAHR, Jörg, 24161 Altenholz OT Klausdorf (DE); BAYTEKIN-GERNGROSS, Melike, 72770 Reutlingen (DE); GERNGROSS, Mark-Daniel, 72770 Reutlingen (DE); CARSTENSEN, Jürgen, 24146 Kiel (DE); ADELUNG, Rainer, 24147 Kiel (DE); PAULOWICZ, Ingo, 53359 Rheinbach (DE)
(86) Internationale Anmeldenummer: PCT/DE2019/100357
(87) Internationale Veröffentlichungsnummer: WO 2019/201395

(56) Entgegenhaltungen:
- DE-T2- 60 032 425
- DE-T2- 69 402 952
- US-A- 4 428 815

## Beschreibung

Die Erfindung betrifft eine Klebe-Fügevorrichtung zur Vorbereitung und / oder Herstellung einer Klebeverbindung in einem Klebepunkt und / oder Klebeabschnitt auf einer metallischen Oberfläche mit einem darauf aufzuklebenden Körper und / oder Bauteil und einem Kleber mittels einer elektrochemischen Ätzvorrichtung.

Ferner betrifft die Erfindung ein Klebe-Fügeverfahren für eine metallische Oberfläche mit einer entsprechend erfindungsgemäß ausgebildeten Klebe-Fügevorrichtung zur Vorbereitung und / oder Herstellung einer Klebeverbindung in einem Klebepunkt und / oder Klebeabschnitt auf einer metallischen Oberfläche mit einem darauf aufzuklebenden Körper und / oder Bauteil und einem Kleber.

Das technische Gebiet der Erfindung betrifft das Fügen mittels Klebetechniken und das Vorbereitung und / oder Herstellen von entsprechenden Klebeverbindungen insbesondere, aber nicht ausschließlich, im Bereich der Fertigung von Schiffen, Flugzeugen, Fahrzeugen, als auch von Sondermaschinen oder Tragkonstruktionen.

Aus dem **Stand der Technik** sind unterschiedliche Fügetechniken bekannt, um zwei Bauteile oder auch allgemein Strukturen miteinander zu verbinden, wobei hierzu unter anderem Schweißen, Löten, Verschrauben und / oder Nieten weitverbreitet und extrem ausgereift sind. Gleichwohl können diese Fügetechniken aber in verschiedenen Anwendungen nicht optimal genutzt werden. Beispielweise kann der Wärmeeintrag beim Schweißen oder Löten während des Fügens für Gefügestrukturen oder Beschichtungen bzw. Bauteile zu hoch sein und so das Material oder die Umgebung, als auch bereits aufgebrachte Lacke und dgl. beschädigen. Schrauben und Nieten erfordern Löcher, die z.B. in vielen metallischen Außenwänden nicht erlaubt sind.

Insbesondere gibt es zu den klassischen Fügeverfahren die Möglichkeit des Klebens, um zwei Bauteile oder Abschnitte oder Werkstücke miteinander zu verbinden, wobei die im Stand der Technik bekannten Klebetechniken häufig durch ihr adhäsives Versagen nicht stark genug oder nicht berechenbar genug sind, um diese auch bei Bauteil- oder Gesamtobjektsplanungen, bspw. im Fahrzeug- oder Flugzeug-, als auch im Schiffsbau und Tragwerkskonstruktionsbereich ausreichend einsetzen zu können.

Das zuvor aufgezeigte Problem konnte jedoch bereits erfolgreich durch das sogenannte "nanoscale sculpturing" auf verschiedenen Metalloberflächen wie z.B. Zink entsprechend der EP 3 140 438 A1 (siehe unten), Al/Al-Legierungen entsprechend der DE 10 2016 113 641 A1 (siehe weiter unten) gelöst werden, indem die Metalloberfläche elektrochemisch mit einer mechanischen Widerhakenstruktur versehen wird, sodass Polymere rein mechanisch hochfest an die strukturierte Metalloberfläche angekoppelt werden können, wodurch ein Versagen nur kohäsiv, also entweder im Polymer oder dem Metall, je nach mechanischer Festigkeit, möglich ist und somit durch die Größe der Klebfläche, die Dicke der Klebeschicht und die mechanische Zug- und Scherfestigkeit des Polymer- oder Keramikklebers eindeutig bestimmt ist. Derartige Strukturklebungen lassen sich daher sehr gut berechnen und somit auch bei relevanten Strukturverbindungen einsetzen, beispielsweise im Fahrzeugbau. Es wird ausdrücklich auf die zuvor genannten Druckschriften Bezug genommen und deren Inhalt einbezogen.

Die Druckschrift EP 3 140 438 A1 offenbart ein verzinktes Werkstück, das wenigstens auf Teilen der Werkstückoberfläche polykristallines Zink mit Korngrößen größer als 20 Mikrometer aufweist, wobei dieses gekennzeichnet ist durch unregelmäßig verteilte, in die Zinkkornwände eindringende, verschiedene Durchmesser aufweisende, konische Poren. Ferner wird weiter ein Verfahren zur Herstellung eines entsprechenden verzinkten Werkstücks aufgezeigt, dass dadurch gekennzeichnet ist, dass ein elektrochemisches Ätzen der verzinkten Werkstückoberfläche in einem wässrigen Elektrolyten enthaltend Kaliumchlorid bei einer vorbestimmten Temperatur unter Anlegen einer periodischen Rechteckspannung erfolgt.

Aus der Druckschrift DE 10 2016 113 641 A1 ist eine Heterostruktur bekannt, wobei diese wenigstens eine erste Teilfläche allein aufweisend Kupfer und wenigstens eine zweite, der ersten Teilfläche gegenüberliegenden Teilfläche allein aufweisend Aluminium oder eine Aluminium-Legierung umfasst, wobei eine Verankerungsschicht angeordnet zwischen erster und zweiter Teilfläche, wobei jede senkrecht zur Verankerungsschicht verlaufende Schnittfläche wenigstens eine von Kupfer umschlossene Insel aus Aluminium oder Aluminium-Legierung aufweist und höchstens die vorbekannten Mischkristalle der Aluminium-Legierung in der Verankerungsschicht auftreten. Ferner betrifft die Erfindung einen Aluminium-Kupfer-Konnektor sowie ein Heterostrukturherstellungsverfahren.

Weiter sind im Stand der Technik unterschiedliche Anordnungen bekannt, mittels denen entsprechende Ätzungen zur Vorbereitung einer Oberfläche vorgenommen werden können. Hierbei wird oftmals das zu bearbeitende Stück, vielmehr der Bearbeitungs- und spätere Klebepunkt, als Spot bezeichnet.

In der Druckschrift US 3,546,088 A wird das Problem behandelt, Ätzungen auf sehr großen Flächen durchzuführen, wobei diese großen Flächen nicht in einem Elektrolyttank hineinpassen, was insbesondere bei Flugzeug- oder Raumschiffkomponenten aus Aluminium, die zum Korrosionsschutz anodisiert werden sollen, nicht möglich ist. Hierzu wird vorgeschlagen, eine Vorrichtung zu verwenden, die über große Flächen beweglich verschiebbar bleiben soll, wobei ein entsprechender Elektrolyt während der Verarbeitung auch seitlich austreten kann.

Die Druckschrift US 4,810,343 A offenbart eine Vorrichtung zur Durchführung einer lokalisierten elektrolytischen Oberflächenbehandlung, die einen Elektrolytbehälter mit einem Elektrolytreservoir und eine Pumpeinrichtung aufweist, die den Elektrolyten einer anodischen Einrichtung zuführen kann, die mit der Oberfläche des zu behandelnden Werkstücks in Kontakt gebracht werden kann, wobei dann in der Vorrichtung zwischen der Oberfläche der Anode und der zu behandelnden Oberfläche, der Anode und dem Werkstück mit den Anschlüssen einer Gleichspannungsquelle verbunden ist, wobei diese mit der Einrichtung verbundene Saugeinrichtungen zum Zurückführen des Elektrolyten zu dem Behälter, nachdem dieser den Strömungsraum passiert hat, aufweist.

Aus der Druckschrift US 4,986,889 A ist ein mit einer zu behandelnden Oberfläche in Verbindung befindlicher elektrolytischer Behandlungssauger bekannt, wobei dieser einen Hohlraum aufweist, der durch eine Elektrode in eine Elektrolytströmungskammer, eine Einlasskammer und eine Ansaugkammer unterteilt ist, wobei die Einlass- und Ansaugkammern in eine Verteilerkammer unterteilbar sind, die mit einer Rohrverbindung und einer Strömungskompensationskammer mit einem Kanal verbunden sind. Hierbei ist ein einziges Werkzeug entnehmbar, dass nach der erfindungsgemäßen Verwendung, nämlich der elektrochemischen Bearbeitung eines Bearbeitungspunktes, auch Spot genannt, nicht weiter verwendet werden kann.

Weiter ist aus der Druckschrift DE 600 32 425 T2 eine Ätzvorrichtung bekannt, bei der ein Wafer von einem Wafertransportroboter aus einer Waferkassette einem Ätzteil zugeführt wird, um geätzt zu werden. Nach dem Ätzprozess wird ein Waferrahmen von einem Waferrahmen-Zuführteil einem Montageteil zugeführt. Das Montageteil, dem der Waferrahmen zugeführt wird, bewegt sich zum oberen Teil eines Bearbeitungsgefäßes des Ätzteils und montiert den Wafer an dieser Position. Danach kehrt das Montageteil in seine ursprüngliche Position zurück. Ein Waferrahmen-Sammelroboter sammelt den Waferrahmen von dem Montageteil, das in seine ursprüngliche Position zurückgekehrt ist, und lagert den Waferrahmen in einer Waferrahmen-Kassette.

Die Druckschrift DE 694 02 952 T2 offenbart eine Vorrichtung zu einer insbesondere selektiven elektrochemischen Behandlung eines leitenden Substrats, die eine mit einer Öffnung versehene und einen Raum definierende Hülle und eine in diesem Raum angeordnete Elektrode umfasst, die dazu bestimmt ist, mit einem der Anschlüsse einer elektrischen Stromquelle verbunden zu werden, wobei das leitende Substrat dazu bestimmt ist, mit dem anderen Anschluss dieser Quelle verbunden zu werden, sowie einen Elektrolyteinlass und einen Elektrolytauslass, die beide in Verbindung mit dem Raum stehen, wobei es außerdem einen Körper aus absorbierendem Material aufweist, flexibel, elektrisch nicht leitend und durchlässig für Gase und Flüssigkeiten, wobei dieser Körper mit der Elektrode in Kontakt steht und die Öffnung verschließt, indem er aus dieser herausragt, eine erste Pumpe, die an dem Elektrolyteinlass angebracht ist, und eine zweite Pumpe, die an dem Elektrolytauslass angebracht ist, wobei die Durchflussmenge der zweiten Pumpe größer als die der ersten Pumpe ist und in Bezug auf die der zweiten Pumpe fest ist, so dass notwendigerweise ein Unterdruck erzeugt wird in diesem **Raum.Problematisch am Stand der Technik** ist es, dass es keine kompakten Klebe-Fügevorrichtungen gibt, die ein Fügen in erfindungsgemäßer Weise in beliebig orientierter Lageausrichtung, also auch an geneigten Flächen und beispielsweise auch über-Kopf-Verklebungen, ermöglichen bzw. zulassen. Insbesondere ist eine entsprechende Oberflächenbehandlung, nämlich Ätzen einer metallischen Oberfläche und ortsgenaues Auftragen eines Substrats an dieser Stelle, insbesondere eines Klebers, vor allem auch an schwer zugänglichen Stellen, beispielsweise in einem Fahrzeug, Schiff oder Flugzeug während dessen Produktion oder Reparatur bzw. Instandsetzung nicht möglich.

Der vorliegenden Erfindung liegt die **Aufgabe** zugrunde, hochfeste Klebeverbindungen auf metallischen Oberflächen herzustellen, die die bisherigen Fügemöglichkeiten aus gefüge-, struktur- und / oder platztechnischen, als auch ästhetischen und / oder mechanischen Gründen ersetzen.

Es soll insbesondere weiter ein lokal begrenzter Abschnitt, Bearbeitungsklebepunkt, nachfolgend auch als Spot bezeichnet, der Metalloberfläche elektrochemisch nach dem oben umrissenen im Stand der Technik bekannten "nanoscale sculpturing" Verfahren strukturiert werden können und im Anschluss soll die Positionierung eines Klebkörpers genau definierbar sein, wobei diese Positionierung lateral, also in der Verkippung und im Abstand zur Metalloberfläche zu sehen ist, oder alternativ dazu im Anschluss eine elektrochemische Abscheidung von Metallen, wie beispielsweise Kupfer o.ä. an der entsprechend zuvor geätzten Oberfläche durchzuführen, wobei notwendige Zwischenschritte wie Reinigen und Trocknen ebenfalls ortstreu durchführbar sein sollen.

Insbesondere sollen vorbereitende Maßnahmen ortstreu und in beliebiger Lage möglich sein, dass eine Klebung in beliebiger Bauteilposition erfolgen kann.

Hierzu sollen entsprechende Vorrichtungen und Verfahren aufgezeigt werden.

**Gelöst** wird / werden diese Aufgabe bzw. Aufgaben mit einer Klebe-Fügevorrichtung gemäß Hauptanspruch sowie einem Klebe-Fügeverfahren gemäß nebengeordnetem Anspruch sowie teils auch mittels den weiteren vorteilhaften optionalen Ausgestaltungen gemäß den Unteransprüchen.

Die Klebe-Fügevorrichtung zur Herstellung einer Klebeverbindung in einem Klebepunkt und / oder Klebeabschnitt auf einer metallischen Oberfläche mit einem darauf aufzuklebenden Körper und / oder Bauteil und einem Kleber mittels einer elektrochemischen Ätzvorrichtung weist einen Vakuumhalter mit einer Vakuumverbindung auf, wobei das Vakuum zwischen der Klebe-Fügevorrichtung und der Oberfläche um den herzustellenden Klebepunkt und / oder Klebeabschnitt herum ausbildbar ist, und weist weiter eine wenigstens zwei unterschiedliche Werkzeuge zeitversetzt und diese in einer definierten Position aufnehmende Werkzeugaufnahme in der Mitte des Vakuumhalters oder im Innenraum des Vakuumhalters oder an dem Vakuumhalters auf, wobei ein erstes zeitversetzt in der Werkzeugaufnahme einsetzbares und verwendbares Werkzeug, nämlich eine elektrochemischen Ätzzelle für einen Elektrolyten mit einem zur metallischen Oberfläche gerichteten Ätzraum, einer Zufuhr für einen Elektrolyten in den Ätzraum, einem Abfluss aus dem Ätzraum, zwei Elektroden mit dazugehörigen elektrischen Kontaktierungen vorgesehen ist, wobei die eine Elektrode mechanisch und elektrisch mit der zu strukturierenden metallischen Oberfläche verbunden ist und die zweite Elektrode nur einen Kontakt zum Elektrolyten, quasi als entsprechende Gegenelektrode, herstellt, und weist weiter noch ein zweites zeitversetzt in der Werkzeugaufnahme einsetzbares und verwendbares Werkzeug zum Halten und Positionieren des auf der geätzten metallischen Oberfläche aufzuklebenden Körpers und / oder Bauteils mit definierter Position innerhalb der Werkzeugaufnahme auf, wobei Abstand, Position, Ausrichtung und / oder Parallelität des aufzuklebenden Körpers für die Klebung sicherstellbar und definiert ausrichtbar ist.

Durch diese Ausgestaltung kann ein elektrochemisches Vorbereiten einer metallischen Oberfläche in jeder Lage erfolgen, nämlich Ausrichtung der vorzubereitenden metallischen Oberfläche, da mittels einer Vakuumpumpe der Vakuumhalter an der Oberfläche festgesaugt wird, wodurch eine temporäre Halterung für die wenigstens zwei Werkzeuge entsteht. Die wenigstens zwei Werkzeuge können dann in die Werkzeugaufnahme der Vorrichtung entsprechend erfindungsgemäß nacheinander eingebracht werden und so das erfindungsgemäße Klebeverfahren unabhängig von der Lageausrichtung der Oberfläche durchführen.

Durch Unterdruck wird der Vakuumhalter ortstreu für die Ätzung und die anschließende Reinigung sowie für das Positionieren des Klebers bzw. Klebkörpers positioniert und fest angedrückt, wobei durch den Unterdruck eine schnelle und sichere Montage und Demontage des Vakuumhalters gewährleistet ist.

Das weitere Besondere an der Ausgestaltung des Vakuumhalters ist in einer besonders bevorzugten Ausführungsform, dass die Mittel zur Unterdruckansaugung vollständig in einer außen, also nicht in der für die Klebung notwendigen zu bearbeitenden metallischen Oberfläche, liegenden Manschette verkörpert sind, so dass der zu bearbeitende Bereich der metallischen Oberfläche umrahmt wird. Die Werkzeugaufnahme befindet sich ebenfalls in der Mitte des Vakuumhalters, also quasi in der Manschette

An der Werkzeugaufnahme mit dem Vakuumhalter lässt sich die Ätzzelle, also das erste Werkzeug, schnell und sicher montieren und demontieren, wobei die Werkzeugaufnahme des Vakuumhalters die Ätzzelle führt und immer wieder gleich positioniert, so dass sich die Ätzzelle über der zu ätzenden Fläche positioniert und die Ätzzelle Elektrolyt-dicht andrückt.

Es ist insbesondere in einer besonders bevorzugten Ausführungsform eine entsprechende Arretierung für die Werkzeuge vorgesehen, so dass diese immer gleich beabstandet bzw. positioniert sind und es somit auch keine zu berücksichtigen Toleranzen zum Beispiel für den Klebespalt gibt.

Im weiteren führt die Werkzeugaufnahme zusammen mit dem Vakuumhalter den aufzuklebenden Körper und kann diesen somit über der geätzten Fläche positioniert absetzen, wobei hierbei ein zweites Werkzeug den Klebkörper andrückt und dabei nicht den Kleber vollständig wegdrückt, sondern vielmehr in einem definierten Abstand, also mit einem vorherbestimmten Klebespalt den aufzuklebenden Klebkörper positioniert, bis eine Aushärtung des Klebers erfolgt ist.

Mögliche Kleber, wobei diese Aufzählung nur exemplarisch und nicht beschränkend sein soll, sind Acrylat-, PU-, Epoxy-Kleber und Kleber auf Basis von Ethylen, Vinyl, Acetat, Silikon sowie für temperaturkritische Anwendungen Kleber auf Keramik-Basis.

In der Automobilfertigung können beispielsweise derartige Klebe-Fügevorrichtungen mit einer speziellen oberflächenangepassten Geometrie ausgebildet werden, so dass zwar eine jeweilige Klebe-Fügevorrichtung individualisiert vorgehalten werden muss, jedoch bei hohen Stückzahlen sich schnell amortisiert, so dass bei gleichen Fahrzeugmodellen definierte Klebungen durchgeführt werden können, wobei diese exakt berechenbar sind und somit auch statisch kalkuliert werden können.

Es können auch entsprechend großflächige Klebungen bei entsprechend ausgestalteten Werkzeugen durchgeführt werden, so dass beispielsweise in der Flugzugindustrie beispielsweise längere Bauteile aus CFK und GFK mit Aluminiumbauteilen verklebt werden können. Hierzu sind entsprechende Ätzzellen mit dem Vakuumhalter auf dem Aluminium aufsetzbar und positionierbar und im weiteren kann mittels eines entsprechenden zweiten Werkzeuges, das ebenfalls an dem Vakuumhalter in einer entsprechenden Werkzeugaufnahme geführt ist, ein entsprechendes CFK- bzw. GFK-Bauteil mit einem Kleber nach der strukturierten metallischen Oberflächenbehandlung entsprechend positioniert und zur Aushärtung fixiert werden, so dass auch hier definierte Klebespalten realisierbar sind, so dass auch diese Klebungen berechenbar werden und statisch nutzbar sind.

Die Haltekraft durch das Vakuum ermöglicht es, dass der Elektrolyt sogar mit Überdruck in den Ätzraum eingebracht wird und so eine aktive Anströmung der Oberfläche mit dem Elektrolyten realisiert wird.

Ferner können selbstverständlich auch horizontalliegende Flächen mit Unterdruck mittels des Elektrolyten, einfach durch die Einwirkung der Schwerkraft bearbeitet werden, so dass ein guter Kontakt des Elektrolyten zur behandelnden Oberfläche gewährleistet ist.

In einer bevorzugten Ausgestaltung ist das wenigstens erste Werkzeug fluidtechnisch an die zu ätzende metallische Oberfläche in Bezug auf Wölbung und / oder Ausdehnung angepasst. Hierdurch ist es möglich komplexe Flächen, sowohl in deren Geometrie als auch in deren Ausdehnung mit nur einem ersten Werkzeug, nämlich einer entsprechenden angepassten Ätzzelle oberflächig zu behandeln, wobei gewährleistet ist, dass der Elektrolyt die gesamte zu bearbeitende Oberfläche erreicht und mit dieser in Kontakt tritt. Hierzu können beispielsweise Kanäle in der Ätzzelle vorgesehen sein, die den Elektrolyten derart über die Oberfläche führen, dass diese homogen geätzt wird.

Das erste zeitversetzt in der Werkzeugaufnahme einsetzbare und verwendbare Werkzeug kann ergänzend zur Reinigung der geätzten metallischen Oberfläche einsetzbar sein, wobei hierzu ergänzend entsprechende Zufuhr- und Abfuhrleitungen für Reinigungs- und / oder Spülflüssigkeiten und / oder Spülmedium vorgesehen sind und / oder die vorhandene Zufuhr und der Abfluss umschaltbar für ein Reinigungs- und / oder Spülflüssigkeiten und / oder Spülmedium sind. Somit besteht die Möglichkeit, unmittelbar nach dem Ätzvorgang mit demselben Werkzeugkopf eine Reinigung bzw. Spülung durchzuführen, da dieselben Anschlüsse für ein Spülmedium verwendet werden können, so dass die entsprechenden Elektrolyt- und Ätzreste entfernt werden können.

Alternativ kann auch ein drittes zeitversetzt in der Werkzeugaufnahme einsetzbares und verwendbares Werkzeug zur Reinigung der geätzten metallischen Oberfläche nach dem Ätzvorgang vorgesehen sein.

Weiter kann ein viertes zeitversetzt in der Werkzeugaufnahme einsetzbares und verwendbares Werkzeug zur lokalen Abscheidung von Kupfer auf strukturierten Aluminium Oberflächen zur Herstellung wenigstens eines elektrischen Kontaktierungspunktes vorgesehen sein. Hierbei ist zu beachten, dass erfindungsgemäß die Ausgestaltung einer weiteren Erfindung auch derart sein kann, dass der entsprechende Vakuumhalter mit zwei Werkzeugaufnahmen ausgestaltet ist, wobei diese zur Aufnahme zweier unterschiedlicher und zeitversetzt nacheinander verwendbarer Werkzeuge ausgebildet ist, wobei das erste Werkzeug die beschriebene Ätzzelle ist und das zweite Werkzeug quasi das vierte Werkzeug der eigentlich hier beschriebenen Erfindung ist, nämlich eine Abscheidevorrichtung zur Abscheidung von Kupfer auf dem entsprechend oberflächenbehandelten Aluminium. Hierdurch ist es möglich definierte elektrische Kontaktierungspunkte aus Kupfer auf einer Aluminiumfläche derart aufzusetzen, dass bei entsprechender Oberflächenbehandlung, insbesondere nach dem nanoscale sculptering-Verfahren eine entsprechende Verbindung zwischen dem Kupfer und dem Aluminium eingegangen wird. Es wird an dieser Stelle ausdrücklich hervorgehoben, dass eine entsprechende Oberflächenbehandlung mit anschließender Kupferabscheidung als eigenständige Erfindung angesehen wird, wobei die gegenständlichen Merkmale die gleichen sind, jedoch nicht die Herstellung einer Klebeverbindung notwendig ist. Hierzu wird diesseits auch noch im Weiteren ausgeführt.

In einer bevorzugten Ausführungsvariante kann wenigstens eine Vakuumpumpe, wobei diese mit der Vakuumkammer über die Vakuumverbindung leitungsverbunden ist, und / oder wenigstens eine Elektrolytbevorratung zur Bevorratung mit einem Elektrolyten und / oder wenigstens ein Elektrolytsammelbehältnis zur Aufnahme des verbrauchten Elektrolyten und / oder wenigstens eine Pumpe zur Elektrolytversorgung des ersten Werkzeuges mit einem Elektrolyten und / oder wenigstens eine Pumpe zur Spülmediumversorgung des ersten und / oder des dritten Werkzeuges und / oder wenigstens eine Steuereinheit zur Vorrichtungssteuerung und / oder Verfahrenssteuerung vorgesehen sein. Insbesondere sind in einer besonders bevorzugten Ausführungsvariante alle zuvor genannten Merkmale kombiniert.

Zusätzlich kann die Klebe-Fügevorrichtung mobil und / oder transportabel einsetzbar ausgebildet sein, so dass hierdurch ein mobiler und flexibler Einsatz gewährleistet ist, wobei dies insbesondere für Reparaturteams, beispielsweise in der Luftfahrt, als auch für Installationsteams bei Sondermaschinenkonstruktionen den Einsatz vor Ort erlaubt.

Selbstverständlich kann der Vakuumhalter über einen entsprechend vorsehbaren Bedienknopf oder andere Auslösevorrichtung vakuumtechnisch aktiviert bzw. deaktiviert werden, so dass eine entsprechend vorgesehene Vakuumpumpe den notwendigen Halt durch Saugkraft ermöglicht. Durch dieses Andrücken wird ferner ermöglicht, dass die elektrochemische Ätzzelle zum Ätzen der metallischen Oberfläche auf diese aufgedrückt werden kann, so dass kein Elektrolyt oder Spülmittel herauslaufen kann und so angrenzende oder rückseitig lackierte Oberflächen nicht beschädigt werden.

Nach einer ersten Klebung kann der Vakuumhalter einfach abgenommen und versetzt werden, so dass eine zweite Klebung möglich wird. Diesbezüglich ist auch selbstverständlich eine Ausgestaltung mit einem zentralen Steuergerät und mehreren Klebe-Fügevorrichtungen möglich, so dass gleichzeitig mehrere Stellen entsprechend bearbeitet werden können. Das eine zentrale Steuergerät kann dann die dort angeschlossenen Klebe-Fügevorrichtungen entsprechend versorgen und steuern.

Der Vakuumhalter kann auch derart ausgestaltet sein, dass der Vakuumhalter den zu klebenden Klebkörper und / oder das Grundmaterial bzw. den Kleber für eine schnellere/definierte Klebung erwärmt.

In einer weiteren Ausgestaltung kann der Vakuumhalter als Führung für Schleif- oder Sandstrahlwerkzeuge dienen, um die zu strukturierende metallische Oberfläche von Schmutz oder Farbresten zu reinigen, die die elektrochemische Ätzung beeinträchtigen könnten.

Insbesondere hat sich herausgestellt, dass die geätzte metallische Oberfläche in ihrem elektrochemischen Potential edler als das unbehandelte Grundmaterial ist.

Es lassen sich auch erfindungsgemäße Klebe-Fügeverbindungen schaffen, die die Festigkeit von Schweißnähten an Metallen aufweisen oder sogar übertreffen, welche eigentlich nicht schweißbar sind oder aufgrund von starken Auswirkungen auf die mechanische Festigkeit nicht geschweißt werden sollten.

Die Vorrichtung ermöglicht zudem räumlich begrenzte, geätzte metallische Oberflächen, an denen hochfeste Klebeverbindungen möglich werden, wobei diese in ihrer Festigkeit mit Schweißverbindungen vergleichbar sind.

Die neue Klebe-Fügetechnik bringt im Gegensatz zum Schweißen keine Hitze ein, wodurch Veränderungen im Gefüge im Bereich der Klebeflächen nahezu verhindert werden.

Im Gegensatz zu anderen Klebverbindungen entsteht eine hochfeste Klebverbindung, die letztendlich nur noch durch die mechanischen Eigenschaften des Klebers bestimmt werden und nicht mehr durch Adhäsionseigenschaften an der Kleber/Metall-Grundfläche.

Es sind Klebe-Fügeverbindungen an sehr engen und schwer zugänglichen Einbaulagen möglich, da die geringe Baugröße der elektrochemischen Zelle in einer bevorzugten Ausgestaltung eine freie Positionierung ermöglicht, die erheblich mehr Freiheitsgrade aufweist als bei vergleichbaren Schweißteilen.

Für die Praktikabilität dieser Vorrichtung ist das Verfahren in einer Anlage realisierbar, die eine kleine Bauform aufweist, die mobil, und zudem auch noch leicht zu montieren und zu demontieren ist. Zudem kann die Positionierung, Ätzung, Reinigung und anschließende Klebung in ähnlichen Zeiten durchgeführt werden, die normalerweise für die zu ersetzenden Fügetechniken benötigt werden.

Das Klebe-Fügeverfahren weist erfindungsgemäß für eine metallische Oberfläche mit einer Klebe-Fügevorrichtung die Schritte, Auswählen der Klebe-Stelle und Positionieren und Befestigen der Klebe-Fügevorrichtung mittels des Vakuumhalters durch Erzeugen und Aufrechterhalten eines Vakuums, paralleles oder nachgeschaltetes Einsetzen des ersten Werkzeuges in die Werkzeugaufnahme, Erzeugen einer Strukturierung auf der metallischen Oberfläche an der definierten Position und Fläche durch elektrochemisches Ätzen mittels des ersten Werkzeuges, Reinigen und Trocknen der strukturierten metallischen Oberfläche unter Zuhilfenahme des ersten Werkzeuges oder eines dritten Werkzeuges, wobei bei Verwendung des dritten Werkzeuges ein Werkzeugwechsel erfolgt, Entnehmen des Werkzeugs aus der Werkzeugaufnahme, Herstellen einer Klebung durch Einsetzen des zweiten Werkzeuges in die Werkzeugaufnahme und Positionieren des aufzuklebenden Körpers und / oder Bauteils in dem zweiten Werkzeug und Aufbringen des Klebers auf der strukturierten metallischen Oberfläche und / oder dem Körper und / oder Bauteil und anschließendes Aufbringen des aufzuklebenden Körpers und / oder Bauteils mittels des zweiten Werkzeuges zur Herstellung einer definierten Spaltbreite, Ausrichtung zu der strukturierten metallischen Oberfläche auf ortsfester Position direkt über der vorher strukturierten metallischen Oberfläche, wobei die Werkzeugaufnahme mit dem Vakuumhalter ortsfest verbleibt, oder Positionieren des aufzuklebenden Körpers und / oder Bauteils und des Klebers auf der strukturierten metallischen Oberfläche und anschließendem Einsetzen des zweiten Werkzeugs in die Werkzeugaufnahme und Anwenden des zweiten Werkzeuges zur Herstellung einer definierten Spaltbreite, Ausrichtung zu der strukturierten metallischen Oberfläche auf ortsfester Position direkt über der vorher strukturierten metallischen Oberfläche, wobei die Werkzeugaufnahme mit dem Vakuumhalter ortsfest verbleibt, Aushärten und / oder Aushärten lassen des Klebers, Entfernen der Klebe-Fügevorrichtung, auf.

Durch das beschriebene Verfahren ist es möglich in einem lokal begrenzten Abschnitt einer metallischen Oberfläche elektrochemisch Strukturen zu ätzen und im Anschluss eine entsprechende Positionierung eines zu klebenden Körpers bzw. Bauteils in einer definierten Ausrichtung und in einem vorherbestimmten Abstand zur metallischen Oberfläche durchzuführen, so dass auf einer metallischen Oberfläche der aufzuklebende Körper bzw. das Bauteil vorbestimmt verklebt werden kann, und so eine optimale Klebverbindung erzielbar ist, die zudem auch noch berechenbar ist.

Besonders an dem Verfahren ist das ortsfeste Arbeiten an einer definierten Stelle, so dass genau so viel Oberfläche strukturiert / elektrochemisch geätzt wird, wie auch für die tatsächlich benötigte Klebefläche notwendig ist. Zudem ist ein Umpositionieren oder Versetzen von irgendwelchen Werkzeugen nicht mehr nötig, da über den definiert platzierten Werkzeughalter und / oder Vakuumhalter und / oder Werkzeugaufnahme lediglich Werkzeuge getauscht werden müssen, wobei diese auf einfachste Weise in den entsprechenden Werkzeugaufnahmen eindeutig positionierbar sind.

In einer bevorzugten Ausführungsvariante der Klebe-Fügevorrichtung kann das Ätzen mittels nanoscale sculpturing erfolgen. Das nanoscale sculpturing Verfahren wurde bereits eingangs kurz erläutert, wobei diesbezüglich nochmals auf den Stand der Technik hingewiesen wird. Es hat sich aber bereits in Tests gezeigt, dass entsprechende Ausgestaltungen der Oberfläche in Kombination mit dem diesseits beanspruchten Verfahren zu extrem haltbaren Klebeverbindungen führen. Das nanoscale sculpturing Verfahren ist zudem für unterschiedliche Metalle anwendbar.

Weiter kann in einer Ausgestaltung des Verfahrens das Auftragen des Klebers mittels einer Kleberauftragshilfe erfolgen und / oder das Aushärten des Klebers unter definierten Bedingungen derart erfolgen, dass hierzu ein Zuführen einer definierten Wärmemenge und / oder mit einer definierten Temperatur erfolgt und / oder UV-Strahlung oder anderer typischer Verfahren, so dass das Aushärten schneller erfolgt.

An dieser Stelle sei angemerkt, dass das Trocknen der gespülten Oberfläche, wobei das Spülen beispielsweise mit Wasser erfolgen kann, durch Pusten oder Trockenblasen realisierbar ist.

Als weitere Ausgestaltung besteht die Möglichkeit die normalerweise unbedenklichen Elektrolyten, die bei elektrochemischen Ätzprozessen verwendet werden, gegen chemisch aggressive Flüssigkeiten auszutauschen, wobei gegebenenfalls auf eine elektrische Bestromung verzichtet werden könnte. Hierzu müsste nach dem Ätzprozess eine Neutralisierung erfolgen, so dass die Werkzeuge entsprechend getauscht werden können.

Es sei an dieser Stelle noch erwähnt, dass der Vakuumhalter eine ausreichende Haltekraft benötigt, um sich selbst, die Werkzeuge und insbesondere die Ätzzelle, nämlich das erste Werkzeug, bei Beaufschlagung mit Fluiddruck in einer beliebig gewählten Position zu halten, so dass auch an senkrechten Wänden oder bei über-Kopf-Anwendung ein Abfallen von der Oberfläche verhindert wird.

In einer Ausführungsvariante könnte der Vakuumhalter insbesondere flach ausgebildet werden, wobei auch mehrzonige Vakuumgebiete möglich sind, so dass zudem auch zusätzliche Backupzonen realisiert werden könnten.

Nachfolgend werden die Vorteile nochmals zusammengefasst:
- kleine Bauform, mobil, leicht und sicher zu montieren und zu demontieren;
- Zeitaufwand für das erfindungsgemäße Klebe-Fügeverfahren ähnlich zu dem im Stand der Technik bekannten und zu ersetzenden Fügeverfahren;
- die erstellte Klebeverbindung ist berechenbar und weist zudem ähnliche oder größere Festigkeitswerte auf als eine Schweißverbindung;
- oftmals sind Klebeverbindung dieser Art auch an unzugänglichen Stellen ausführbar, wo ansonsten eine Schweißverbindung aufgrund des fehlenden Platzes die Benutzung eines Schweißgerätes nicht erlaubt;
- es erfolgt kein Wärmeeintrag, insbesondere kein Hitzeeintrag der das Grundmaterial oder einen vorhandenen Farbanstrich verändern könnte;
- es sind keine unansehnlichen Schweißnähte zu erkennen, es müssen keine Löcher in das Grundmaterial eingebracht werden;
- zudem sind Fügeverbindungen an dünnen Blechen möglich, wobei diese erheblich höhere Festigkeiten aufweisen;
- bereits fertig gestellte Bauteile wie zum Beispiel eine Schiffswand, Rohrleitungen oder Träger können nachträglich auf einfachste Weise mittels des erfindungsgemäßen hochfesten Klebe-Fügeverfahren entsprechende aufzuklebende Körper und / oder Bauteile aufnehmen;
- nahezu jede Einbaulage ist realisierbar;
- der aufzutragende Klebstoff, ein zunächst fließfähiges und hiernach aushärtbares Material wird in einer einstellbaren und definierbar gleichmäßigen Dicke ausgeführt;
- als anzuklebende Körper und / oder Bauteile können beispielsweise metallische Körper mit eingebrachten Gewinden verwendet werden, so dass diese metallischen Körper mit den eingebrachten Gewinden auf die vorhandene metallische Oberfläche aufgeklebt werden;
- insbesondere kann die Vorrichtung bzw. das Verfahren besonders bevorzugt an massiven metallischen Bauteilen, die in der Regel nur schlecht bewegbar sind, verwendet werden.

Nachfolgend werden Ausführungsbeispiele der Erfindung anhand der beiliegenden Zeichnungen in der **Figurenbeschreibung** detailliert beschrieben, wobei diese die Erfindung erläutern sollen und nicht beschränkend zu werten sind:
Es zeigen:
- Fig. 1: eine schematische Darstellung eines Ausführungsbeispiels einer mobilen Ätzanlage 6;
- Fig. 2: eine schematische Darstellung eines Ausführungsbeispiels des Vakuumhalters 1 mit einem noch nicht eingesetzten ersten Werkzeug 31;
- Fig. 3: eine schematische Darstellung des in Fig. 2 gezeigten Ausführungsbeispiels des Vakuumhalters 1 mit dem eingesetzten ersten Werkzeug 31, wobei dieses nur positioniert aber noch nicht fixiert ist;
- Fig. 4: eine schematische Darstellung des in Fig. 2 und 3 gezeigten Ausführungsbeispiels des Vakuumhalters 1 mit dem eingesetzten und fixierten ersten Werkzeug 31;
- Fig. 5: eine schematische Darstellung eines Ausführungsbeispiels des Vakuumhalters 1 mit einem noch nicht eingesetzten zweiten Werkzeug 32 sowie einem exemplarisch ausgeführten aufzuklebenden Körper 4;
- Fig. 6: eine schematische Darstellung des in Fig. 5 gezeigten Ausführungsbeispiels des Vakuumhalters 1 mit dem noch nicht eingesetzten zweiten Werkzeug 32 sowie dem exemplarisch ausgeführten aufzuklebenden Körper 4, wobei dieser bereits positioniert wurde;
- Fig. 7: eine schematische Darstellung des in Fig. 5 und 6 gezeigten Ausführungsbeispiels des Vakuumhalters 1 mit dem eingesetzten und arretierten zweiten Werkzeug 32 sowie dem exemplarisch ausgeführten aufzuklebenden positionierten Körper 4;
- Fig. 8: eine schematische Darstellung des erfindungsgemäßen Vakuumhalters 1 von der Unterseite, der erfindungsgemäß auf der metallischen Oberfläche 5 aufsetzbar ist;
- Fig. 9: eine schematische Darstellung des erfindungsgemäßen Vakuumhalters 1 von der Unterseite, entsprechend Fig. 8, wobei hier noch das erste Werkzeug 31 gezeigt ist;
- Fig. 10: eine schematische Darstellung eines ersten Anwendungsbeispiels der Klebe-Fügevorrichtung an einer ersten metallischen Oberflächenstruktur 5, wobei aus Darstellungsgründen lediglich das erste Werkzeug 31 gezeigt ist;
- Fig. 11: eine schematische Darstellung eines zweiten Anwendungsbeispiels der Klebe-Fügevorrichtung an einer zweiten metallischen Oberflächenstruktur 5, wobei aus Darstellungsgründen lediglich das erste Werkzeug 31 gezeigt ist und
- Fig. 12: eine schematische Darstellung eines dritten Anwendungsbeispiels der Klebe-Fügevorrichtung an einer dritten metallischen Oberflächenstruktur 5, wobei aus Darstellungsgründen lediglich das erste Werkzeug 31 gezeigt ist.

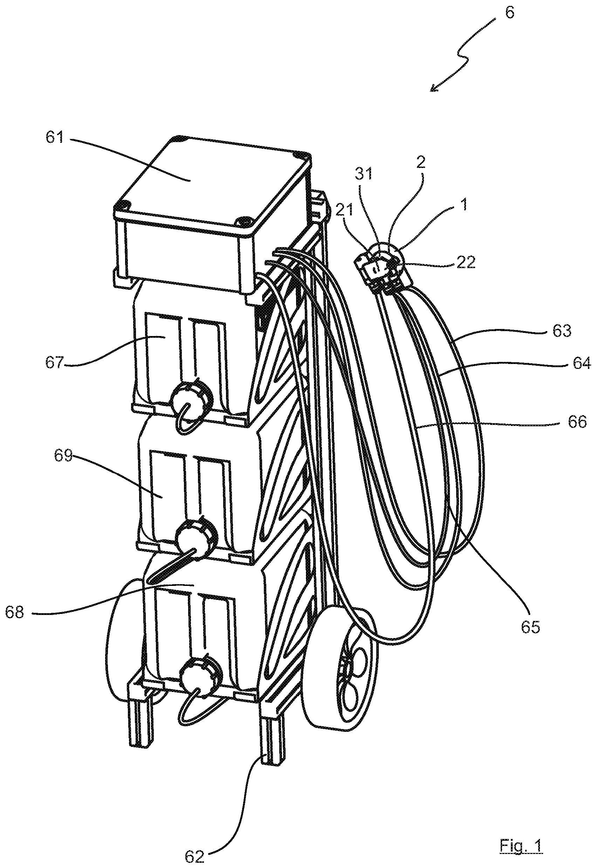

Ferner zeigen die Abbildungen 1 bis 5 die erfindungsgemäße Vorrichtung anhand einer Aluminiumfläche, auf der ein Werkstück aufgeklebt werden soll. Es zeigen:

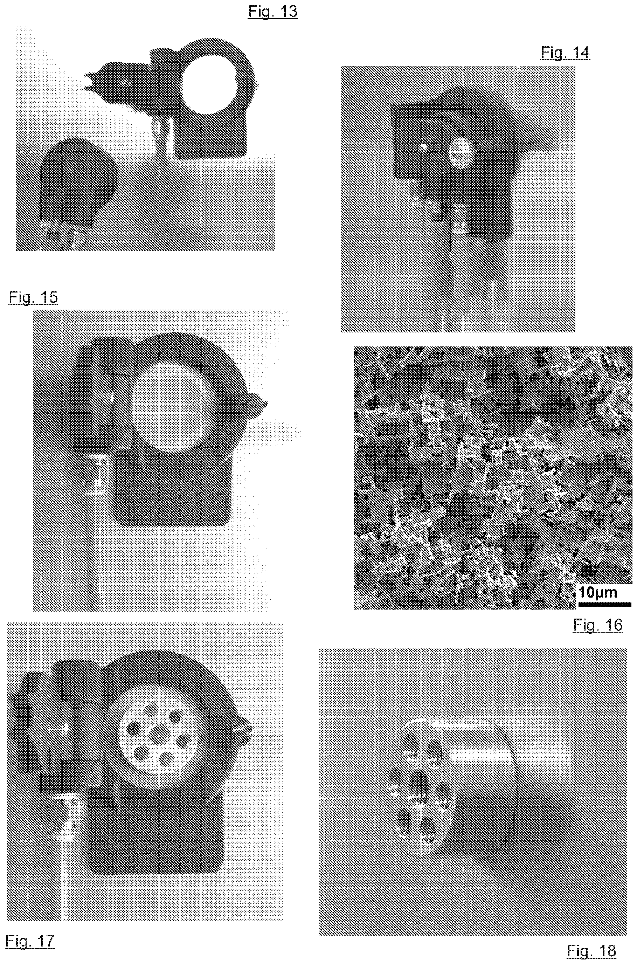

- Fig. 13:: Vakuum-gestützte Werkzeugaufnahme vor dem Aufsetzen der Ätzzelle (erstes Werkzeug) zur elektrochemischen Prozessierung einer exemplarisch gewählten Aluminiumoberfläche;
- Fig. 14:: Vakuum-gestützte Werkzeugaufnahme mit aufgesetzter und fixierter Ätzzelle (erstes Werkzeug) während der elektrochemischen Prozessierung der Aluminiumoberfläche;
- Fig. 15:: Vakuum-gestützte Werkzeugaufnahme mit entfernter Ätzzelle (erstes Werkzeug) nach durchgeführter elektrochemischer Prozessierung der Aluminiumoberfläche (kreisrunde, dunkle Fläche innerhalb der Werkzeugaufnahme);
- Fig. 16:: Elektronenmikroskopieaufnahme der strukturierten Aluminiumoberfläche, also nach dem Behandlungsverfahren, in diesem Fall das nanoscale sculpturing-Verfahren mit dem System;
- Fig. 17:: aufgeklebtes Werkstück vor Entfernung der Vakuum-gestützten Werkzeugaufnahme, jedoch nach Entfernung der Positionierungshilfe (zweites Werkzeug) und
- Fig. 18:: aufgeklebtes Werkstück nach Entfernung der Positionierungshilfe (zweites Werkzeug) und der Vakuum-gestützten Werkzeugaufnahme.

An dieser Stelle soll darauf hingewiesen werden, dass diese Figuren lediglich die Erfindung erläutern aber nicht beschränken sollen. Insbesondere sind gekrümmte geometrische metallische Oberflächen möglich, die mittels entsprechend fluidtechnisch optimierter Ätzwerkzeuge entsprechend bearbeitet werden können, wobei selbstverständlich auch geometrisch angepasste Vakuumhalter Verwendung finden. Ferner können weitere vier aufzuklebende Körper bzw. Bauteile verwendet werden, die sich von dem hier dargestellten Beispiel deutlich unterscheiden. Es sei an dieser Stelle darauf hingewiesen, dass die aufzuklebende Seite des aufzuklebenden Körpers bzw. Bauteils eine entsprechende Kontur aufweisen sollte, die der Kontur der metallischen Oberfläche entspricht. Es sind Klebungen auch zwischen Metallen und Nichtmetallen möglich, wobei hierzu selbstverständlich auf die entsprechenden Kleber des Standes der Technik hingewiesen wird.

In **Fig. 1** ist eine schematische Darstellung eines Ausführungsbeispiels einer mobilen Ätzanlage 6 dargestellt.

Hierbei sind zunächst auf einem Trolley 62 drei Vorratsgefäße angeordnet, nämlich ein Elektrolyttank 67, ein Sammelbehälter für verbrauchten Elektrolyt 68 sowie ein Vorratstank für ein Spülmedium 69.

Darüber ist eine zentrale Box 61 angeordnet, die eine Vakuumpumpe, eine Steuereinheit, ein Ventilinsel, Elektrolytpumpe sowie bedarfsweise eine Spülpumpe (alle in 61) aufweist. Diese Steuereinheit und die darin angeordneten Aggregate sind über Schlauch- und Kabelverbindungen, nämlich Elektrolytschlauchzufuhr 63, Elektrolytschlauchabfluss 64, Stromkabel Elektrolyt Elektrode 65 und Vakuumschlauch 66, mit dem Vakuumhalter 1 sowie den Elektroden 12, 313 als auch dem ersten Werkzeug 31 verbunden, wobei hierüber der Elektrolyt hin transportiert wird, der verbrauchte Elektrolyt rücktransportiert und entsprechende Ströme übertragen werden, die zur Umsetzung des elektrochemischen Ätzverfahrens notwendig sind. Über die Elektrolytleitungen 63, 64 kann bei entsprechende Ventilsteuerung innerhalb der 61 ein entsprechendes Spülmedium 69 nach dem Ätzen zugeführt werden, mit dem die strukturierte metallische Oberfläche 5 erfindungsgemäß gespült wird.

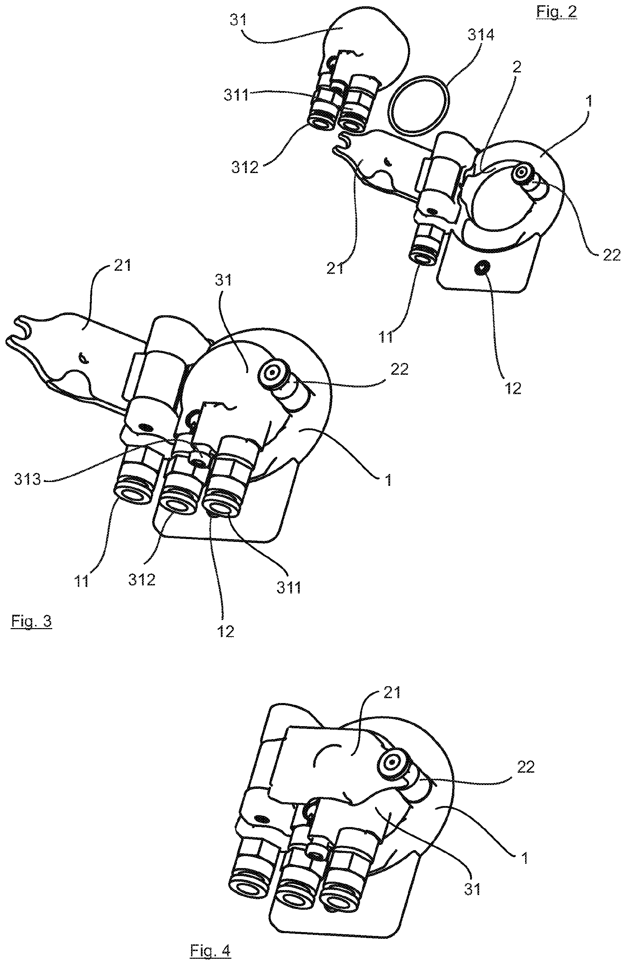

**Fig. 2** zeigt eine schematische Darstellung eines Ausführungsbeispiels des Vakuumhalters 1 mit einem noch nicht eingesetzten ersten Werkzeug 31.

Der Vakuumhalter 1 weist im Innenraum eine Werkzeugaufnahme 2 auf. Auf der Unterseite des Vakuumhalters 1 sind entsprechende O-Ringe vorgesehen, die den Vakuumhalter 1 auf der metallischen Oberfläche 5 abdichten, so dass mittels einer Vakuumpumpe 61 über den Vakuumanschluss 11 ein Vakuum hergestellt werden kann, so dass sich der Vakuumhalter 1 auf der metallischen Oberfläche 5 ansaugt.

Weiter zugehörig zu der Werkzeugaufnahme 2 ist ein Werkzeugsicherungsbügel 21 sowie ein Werkzeugsicherungsverschluss 22, die bei definierten Werkzeugabmessungen, nämlich des wenigstens ersten 31 und zweiten 32 Werkzeuges, entsprechend vorbestimmt positioniert werden können.

Ebenso zu dem Vakuumhalter 1 zugehörig ist ein erster Stromanschluss als Elektrode 12, wobei dieser als Federkontakt auf der Unterseite des Vakuumhalters 1 auf der metallischen Oberfläche 5 aufsetzbar ist.

Zudem ist noch das erste Werkzeug 31, nämlich die Ätzzelle mit der Elektrolytzufuhr 311 und dem Abfluss 312 sowie dem Stromanschluss für den Elektrolyten, nämlich zweite Elektrode 313 und einem entsprechenden Dichtring 314 dargestellt.

In **Fig. 3** ist eine schematische Darstellung des in Fig. 2 gezeigten Ausführungsbeispiels des Vakuumhalters 1 mit dem eingesetzten ersten Werkzeug 31 gezeigt, wobei dieses nur positioniert aber noch nicht fixiert ist.

**Fig. 4** zeigt eine schematische Darstellung des in Fig. 2 und 3 gezeigten Ausführungsbeispiels des Vakuumhalters 1 mit dem eingesetzten und fixierten ersten Werkzeug 31, wobei der entsprechende Werkzeugsicherungsbügel 21 mit dem Werkzeugsicherungsverschluss 22 zusammen wirkt und das erste Werkzeug 31 in der Werkzeugaufnahme 2 definiert sichert.

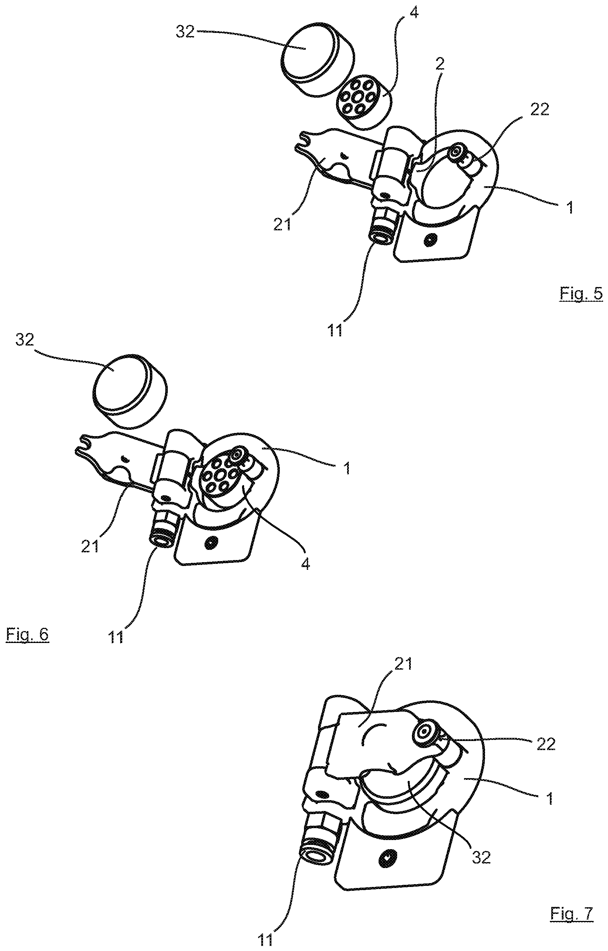

In **Fig. 5** ist eine schematische Darstellung eines Ausführungsbeispiels des Vakuumhalters 1 mit einem noch nicht eingesetzten zweiten Werkzeug 32 sowie einem exemplarisch ausgeführten aufzuklebenden Körper 4 gezeigt.

Der aufzuklebende Körper 4 weist Montagebohrungen auf, die beispielsweise mit Gewinden ausgebildet sein können, wobei der aufzuklebende Körper 4 auf die entsprechende metallische Oberfläche 5 letztendlich aufgeklebt wird und so über Schraubverbindungen entsprechende weitere Bauteil verbunden werden können.

**Fig. 6** zeigt eine schematische Darstellung des in Fig. 5 gezeigten Ausführungsbeispiels des Vakuumhalters 1 mit dem noch nicht eingesetzten zweiten Werkzeug 32 sowie dem exemplarisch ausgeführten aufzuklebenden Körper 4, wobei dieser bereits positioniert wurde.

Zunächst wurde der Kleber aufgetragen, wobei dies entweder auf dem aufzuklebenden Körper 4 und / oder auf der strukturierten metallischen Oberfläche 5 erfolgt, und im Anschluss daran der aufzuklebende Körper 4 entsprechend vorpositioniert wurde.

**Fig. 7** zeigt eine schematische Darstellung des in Fig. 5 und 6 gezeigten Ausführungsbeispiels des Vakuumhalters 1 mit dem eingesetzten und arretierten zweiten Werkzeug 32 sowie dem exemplarisch ausgeführten aufzuklebenden positionierten Körper 4.

Nach dem Vorpositionieren des aufzuklebenden Körpers 4 wurde das zweite Werkzeug, nämlich die Halte- und Positionierungshilfe 32 auf dem aufzuklebenden Körper 4 derart positioniert, dass die Halte- und Positionierungshilfe 32 innerhalb der Werkzeugaufnahme 2 ausgerichtet ist, wobei die Halte- und Positionierungshilfe 32 mittels des Werkzeugsicherungsbügels 21 in Kombination mit dem Werkzeugsicherungsverschluss 22 derart gehalten wird, dass der Kleber in einer definierten Höhe, also auch der aufzuklebende Körper 4 mit einem Kleberspalt vorliegt. Diese Position wird solange eingehalten, bis der Kleber ausreichend ausgehärtet ist. Im Anschluss daran kann die komplette Klebe-Fügevorrichtung entfernt werden und der Kleber kann weiter final aushärten.

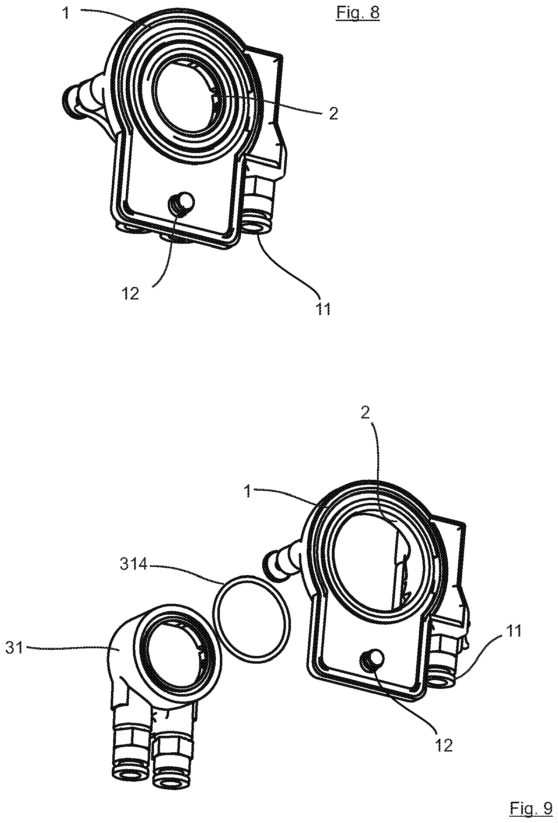

**Fig. 8** zeigt eine schematische Darstellung des erfindungsgemäßen Vakuumhalters 1 von der Unterseite, der erfindungsgemäß auf der metallischen Oberfläche 5 aufsetzbar ist.

Hier ist die Unterseite des Vakuumhalters 1 zu erkennen, wobei weiter noch die entsprechende zugehörige Werkzeugaufnahme 2 zu erkennen ist. Zudem ist noch der Vakuumanschluss 11 erkennbar und die von der Oberseite durchgeführte erste Elektrode 12, nämlich der Stromanschluss an der metallischen Oberfläche 5. Auf der Unterseite des Vakuumhalters 1 sind die unterschiedlichen Saugbereiche zu erkennen, die dazu dienen, den entsprechenden Unterdruck / das Vakuum flächenmäßig zu verteilen und so ein Ansaugen des Vakuumhalters 1 an die metallische Oberfläche 5 zu gewährleisten.

Der Vakuumhalter 1 wird durch zwei o-Ringe begrenzt, wobei diese die Fläche definieren, auf der das Vakuum wirkt. Die Gesamtfläche, die mit Vakuum beaufschlagt wird, multipliziert mit dem Unterdruck, definiert die Kraft, mit der der Vakuumhalter 1 an die Metallfläche 5 gedrückt wird. Diese sollte mindestens einen Faktor 3 größer sein als die Ätzfläche, um mit genügender Sicherheit ein Abdrücken der gesamten Apparatur zu vermeiden. Die Durchmesser und die Wahl der Dichtungsringe sind so gewählt, dass auch auf etwas strukturierten Oberflächen eine sichere Vakuumabdichtung hergestellt wird. Der gefederte elektrische Kontakt / die erste Elektrode 12 kontaktiert die zu ätzende metallische Oberfläche 5.

In **Fig. 9** ist eine schematische Darstellung des erfindungsgemäßen Vakuumhalters 1 von der Unterseite, entsprechend Fig. 8 gezeigt, wobei hier noch ergänzend das erste Werkzeug 31 gezeigt ist.

Das erste Werkzeug 31 ist die Ätzzelle, die in die Werkzeugaufnahme 2 eingeführt wird, wobei ergänzend ein Dichtring 314 eingebracht wird, wobei dieser Dichtring 314 gewährleistet, dass sicher keine Elektrolyt- oder Spülflüssigkeit aus der Ätzzelle nach draußen dringt und die Fläche limitiert wird.

Die Struktur mit inneren Kammern und Kanälen ist optimiert auf die homogene Umströmung der zu ätzenden Fläche, dem Abtransport sich bildender Wasserstoffblasen und einer turbulenten Strömung, um Punkte auf der Oberfläche 5 mit reduzierter statischer Strömung zu vermeiden. Der Elektrolytabfluss liegt bewusst auf der Oberseite der Ätzzelle 31, um auch durch Gravitation die Wasserstoffblasen abzuführen. Die Gegenelektrode 313 wurde großflächig, parallel und mit genügendem Abstand von der zu ätzenden Fläche positioniert, um eine homogene elektrische Potentialverteilung auf der Ätzfläche zu gewährleisten.

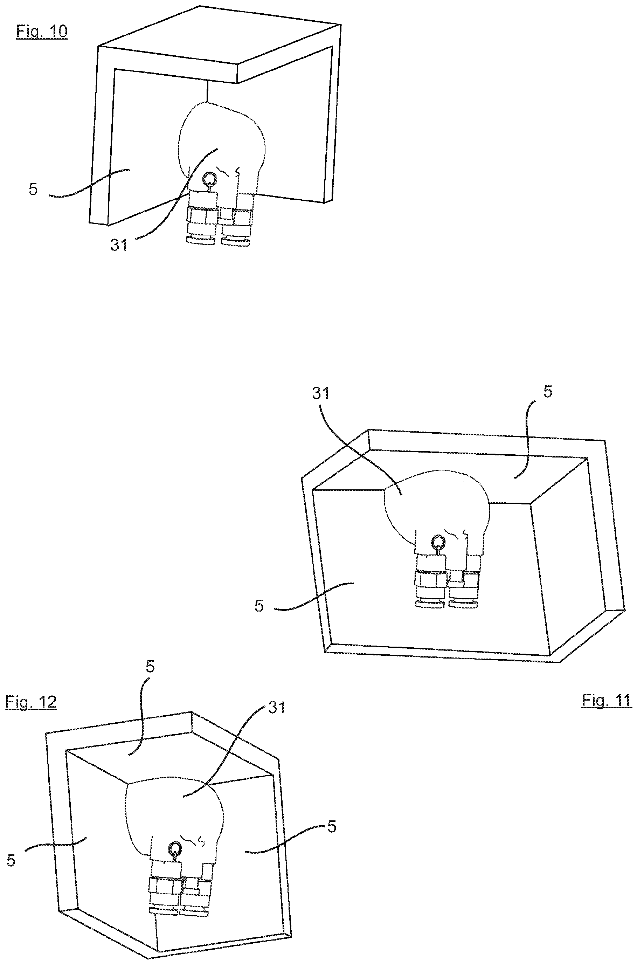

**Fig. 10** zeigt eine schematische Darstellung eines ersten Anwendungsbeispiels der Klebe-Fügevorrichtung an einer ersten metallischen Oberflächenstruktur 5, wobei aus Darstellungsgründen lediglich das erste Werkzeug 31 gezeigt ist.

Bei der metallischen Oberflächenstruktur 5 handelt es sich um eine innenliegende Ecke, an die ein entsprechendes Werkzeug angepasst ist.

An dieser Stelle wird darauf hingewiesen, dass der einfachste Anwendungsfall eine plane metallische Oberfläche ist. Gleichwohl können auch gekrümmte Oberflächen oder aber auch mit Winkeln versehene Bereiche entsprechend bearbeitet werden.

In **Fig. 11** ist eine schematische Darstellung eines zweiten Anwendungsbeispiels der Klebe-Fügevorrichtung an einer zweiten metallischen Oberflächenstruktur 5, wobei aus Darstellungsgründen lediglich das erste Werkzeug 31 gezeigt.

Hierbei handelt es sich um eine Außenecke zweier aufeinander treffender Flächenabschnitte, auf die letztendlich ein aufzuklebender Körper 4 aufgeklebt wird.

**Fig. 12** stellt eine schematische Darstellung eines dritten Anwendungsbeispiels der Klebe-Fügevorrichtung an einer dritten metallischen Oberflächenstruktur 5 dar, wobei aus Darstellungsgründen lediglich das erste Werkzeug 31 gezeigt ist.

Hierbei handelt es sich um eine Außenecke dreier aufeinander treffender Flächenabschnitte, auf die letztendlich ein aufzuklebender Körper 4 aufgeklebt wird, wobei dies bereits eine sehr komplexe Form darstellt und die Ätzzelle, nämlich das erste Werkzeug 31 entsprechende innenliegende Kanäle aufweist, die eine optimale Flüssigkeitsverteilung auf der metallischen Oberfläche 5 gewährleisten.

### Weiteres Ausführungsbeispiel:

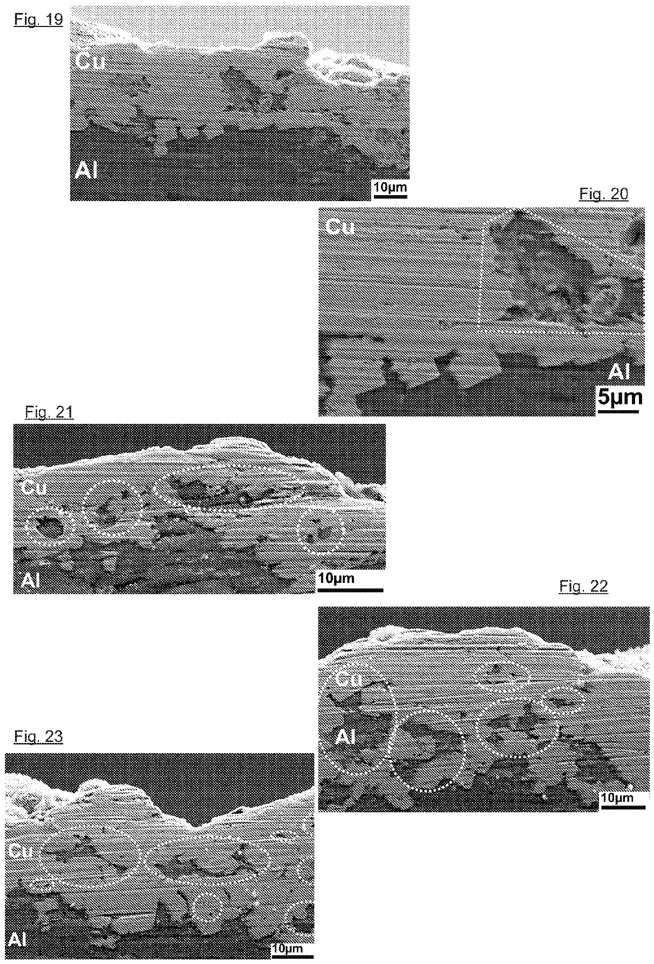

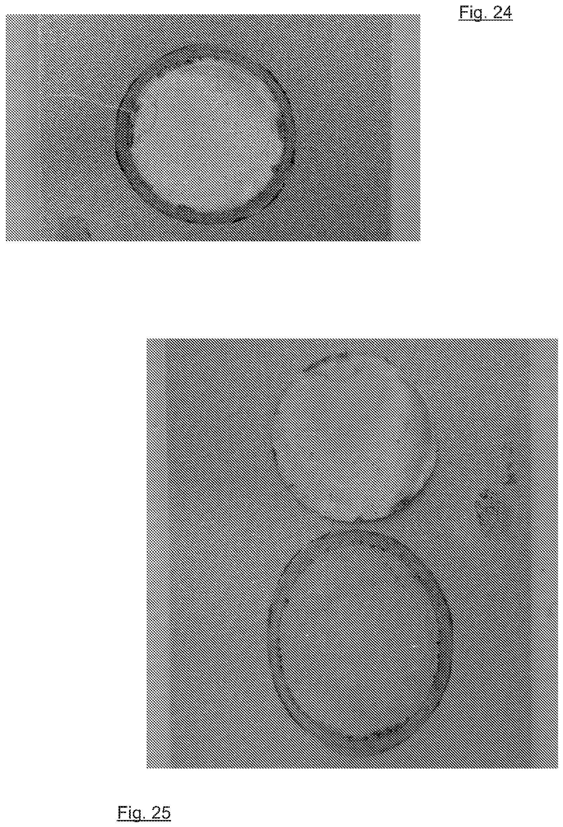

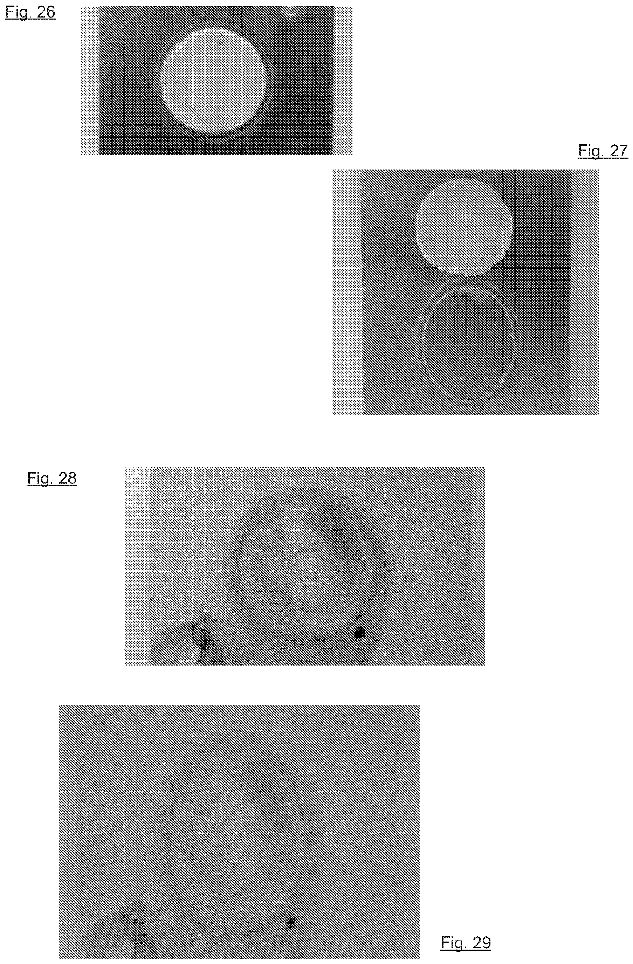

Nachfolgend erfolgt die Beschreibung der weiteren Ausgestaltung, nämlich der Möglichkeit Kupfer auf Aluminium mit Hilfe des vierten Werkzeugs (bzw. eigentlich dann des zweiten Werkzeugs, wenn dies als einzelne Ausgestaltungsvariante angenommen wird) abzulagern (dieses soll keinesfalls beschränkend für die Klebe-Fügevorrichtung und das dazugehörige Verfahren sein!), anhand eines alternativen Ausführungsbeispiels unter Hinzunahme der zuvor erläuterten Figuren und der weiteren Fig. 19 bis Fig. 29. Hierzu bedarf es in einer Variante einer Ausführungsform, bei der als erstes Werkzeug erneut eine Ätzzelle 31 verwendet wird, mittels der die metallische Oberfläche 5, die in diesem Fall Aluminium ist, entsprechend strukturiert wird. Im Anschluss wird ein zweites Werkzeug 32 verwendet, um Kupfer auf der vorbereiteten Aluminiumoberfläche aufzutragen. Hiervon sind entsprechende Schliffbilder in den nachfolgenden Fig. 19 bis Fig. 23 gezeigt, aus denen zu erkennen ist, dass es neben Hinterschneidungen auch vollständig umschlossene Inselbereiche gibt. Entsprechend verhält es sich mit Klebern, die quasi durch das in den Abbildungen dargestellte Kupfer dargestellt werden würden (entsprechend der Klebe-Fügevorrichtung und dem Verfahren). Die quasi weitere Erfindungsausgestaltung wäre dann selbstverständlich eine entsprechende Vorrichtung zum Aufbringen von einem Metall, wie bspw. Kupfer auf eine vorher vorbereitete metallische Oberfläche, analog zu der oben beschriebenen Erfindung (erstes Werkzeug in Kombination mit dem vierten Werkzeug).

### Bezugszeichenliste

- 1: Vakuumhalter
- 11: Vakuumanschluss
- 12: Stromanschluss an metallischer Oberfläche / erste Elektrode
- 2: Werkzeugaufnahme
- 21: Werkzeugsicherungsbügel
- 22: Werkzeugsicherungsverschluss
- 31: erstes Werkzeug / Ätzzelle
- 311: Elektrolytzufuhr
- 312: Abfluss
- 313: Stromanschluss Elektrolyt / zweite Elektrode
- 314: Dichtring / Vakuumring
- 32: zweites Werkzeug / Halte- und Positionierungshilfe
- 4: aufzuklebender Körper / Bauteil
- 5: metallische Oberfläche
- 6: mobile Ätzanlage
- 61: Vakuumpumpe, Steuereinheit, Ventilinsel, Elektrolytpumpe, Spülpumpe
- 62: Trolley
- 63: Elektrolytschlauchzufuhr
- 64: Elektrolytschlauchabfluss
- 65: Stromkabel Elektrolyt Elektrode
- 66: Vakuumschlauch
- 67: Elektrolyttank
- 68: Elektrolyttank (verbraucht)
- 69: Spülmedium

## Patentansprüche

1. Klebe-Fügevorrichtung zur Vorbereitung und / oder Herstellung einer Klebeverbindung in einem Klebepunkt und / oder Klebeabschnitt auf einer metallischen Oberfläche (5) mit einem darauf aufzuklebenden Körper und / oder Bauteil (4) und einem Kleber mittels einer elektrochemischen Ätzvorrichtung
aufweisend:
- einen Vakuumhalter (1) mit einer Vakuumverbindung (11), wobei das Vakuum zwischen der Klebe-Fügevorrichtung und der Oberfläche (5) um den herzustellenden Klebepunkt und / oder Klebeabschnitt herum ausbildbar ist;
**dadurch gekennzeichnet, dass die Vorrichtung weiter aufweist:**
- eine wenigstens zwei unterschiedliche Werkzeuge (31, 32) zeitversetzt und diese in einer definierten Position aufnehmende Werkzeugaufnahme (2) in der Mitte des Vakuumhalters (1) oder im Innenraum des Vakuumhalters (1) oder an dem Vakuumhalter (1);
- ein erstes zeitversetzt in der Werkzeugaufnahme (2) einsetzbares und verwendbares Werkzeug (31), nämlich eine elektrochemischen Ätzzelle für einen Elektrolyten mit:
- einem zur metallischen Oberfläche (5) gerichteten Ätzraum;
- einer Zufuhr (311) für einen Elektrolyten in den Ätzraum, einem Abfluss (312) aus dem Ätzraum;
- zwei Elektroden (313, 12) mit dazugehörigen elektrischen Kontaktierungen, wobei die eine Elektrode (12) mechanisch und elektrisch mit der zu strukturierenden metallischen Oberfläche (5) verbunden ist und die zweite Elektrode (313) einen Kontakt zum Elektrolyten herstellt,
- ein zweites zeitversetzt in der Werkzeugaufnahme (2) einsetzbares und verwendbares Werkzeug (32) zum Halten und Positionieren des auf der geätzten metallischen Oberfläche (5) aufzuklebenden Körpers und / oder Bauteils (4) mit definierter Position innerhalb der Werkzeugaufnahme (2), wobei Abstand und / oder Position und / oder Ausrichtung und / oder Parallelität des aufzuklebenden Körpers (4) für die Klebung sicherstellbar und definiert ausrichtbar ist.

2. Klebe-Fügevorrichtung nach Anspruch 1,
**dadurch gekennzeichnet, dass**
das wenigstens erste Werkzeug (31) fluidtechnisch an die zu ätzende metallische Oberfläche (5) in Bezug auf Wölbung und / oder Ausdehnung angepasst ist.

3. Klebe-Fügevorrichtung nach einem der Ansprüche 1 oder 2,
**dadurch gekennzeichnet, dass**
das erste zeitversetzt in der Werkzeugaufnahme (2) einsetzbare und verwendbare Werkzeug (31) ergänzend zur Reinigung der geätzten metallischen Oberfläche (5) einsetzbar ist, wobei hierzu ergänzend entsprechende Zufuhr- und Abfuhrleitungen für Reinigungs- und / oder Spülflüssigkeiten und / oder Spülmedium (69) vorgesehen sind und / oder die vorhandene Zufuhr (311) und der Abfluss (312) umschaltbar für ein Reinigungs- und / oder Spülflüssigkeiten und / oder Spülmedium (69) sind.

4. Klebe-Fügevorrichtung nach einem der vorangehenden Ansprüche,
**dadurch gekennzeichnet, dass**
ein drittes zeitversetzt in der Werkzeugaufnahme (2) einsetzbares und verwendbares Werkzeug zur Reinigung der geätzten metallischen Oberfläche (5) nach dem Ätzvorgang vorgesehen ist.

5. Klebe-Fügevorrichtung nach einem der vorangehenden Ansprüche,
**dadurch gekennzeichnet, dass**
ein viertes zeitversetzt in der Werkzeugaufnahme (2) einsetzbares und verwendbares Werkzeug zur lokalen Abscheidung von Kupfer auf strukturierten Aluminium Oberflächen zur Herstellung wenigstens eines elektrischen Kontaktierungspunktes vorgesehen ist.

6. Klebe-Fügevorrichtung nach einem der vorangehenden Ansprüche,
**dadurch gekennzeichnet, dass**
- wenigstens eine Vakuumpumpe (61), wobei diese mit der Vakuumkammer (1) über die Vakuumverbindung (11, 66) leitungsverbunden ist,
und / oder
- wenigstens eine Elektrolytbevorratung (67) zur Bevorratung mit einem Elektrolyten und / oder
- wenigstens ein Elektrolytsammelbehältnis (68) zur Aufnahme des verbrauchten Elektrolyten
und / oder
- wenigstens eine Pumpe (61) zur Elektrolytversorgung des ersten Werkzeuges (31) mit einem Elektrolyten
und / oder
- wenigstens eine Pumpe (61) zur Spülmediumversorgung des ersten und / oder des dritten Werkzeuges
und / oder
- wenigstens eine Steuereinheit (61) zur Vorrichtungssteuerung und / oder Verfahrenssteuerung
vorgesehen ist / sind.

7. Klebe-Fügevorrichtung nach einem der vorangehenden Ansprüche,
**dadurch gekennzeichnet, dass**
die Klebe-Fügevorrichtung mobil und / oder transportabel einsetzbar ausgebildet ist.

8. Klebe-Fügeverfahren für eine metallische Oberfläche mit Verwendung einer Klebe-Fügevorrichtung nach einem der vorangehenden Ansprüche,
**aufweisend die Schritte:**
- Auswählen der Klebe-Stelle und Positionieren und Befestigen der Klebe-Fügevorrichtung mittels des Vakuumhalters (1) durch Erzeugen und Aufrechterhalten eines Vakuums;
- paralleles oder nachgeschaltetes Einsetzen des ersten Werkzeuges (31) in die Werkzeugaufnahme (2);
- Erzeugen einer Strukturierung auf der metallischen Oberfläche (5) an der definierten Position und Fläche durch elektrochemisches Ätzen mittels des ersten Werkzeuges (31);
- Reinigen und Trocknen der strukturierten metallischen Oberfläche (5) unter Zuhilfenahme des ersten Werkzeuges (31) oder eines dritten Werkzeuges, wobei bei Verwendung des dritten Werkzeuges ein Werkzeugwechsel erfolgt;
- Entnehmen des Werkzeugs (31) aus der Werkzeugaufnahme (2)
- Herstellen einer Klebung durch:
- Einsetzen des zweiten Werkzeuges (32) in die Werkzeugaufnahme (2) und Positionieren des aufzuklebenden Körpers und / oder Bauteils (4) in dem zweiten Werkzeug (32) und Aufbringen des Klebers auf der strukturierten metallischen Oberfläche (5) und / oder dem Körper und / oder Bauteil (4) und anschließendes Aufbringen des aufzuklebenden Körpers und / oder Bauteils (4) mittels des zweiten Werkzeuges (32) zur Herstellung einer definierten Spaltbreite, Ausrichtung zu der strukturierten metallischen Oberfläche (5) auf ortsfester Position direkt über der vorher strukturierten metallischen Oberfläche (5),
wobei die Werkzeugaufnahme (2) mit dem Vakuumhalter (1) ortsfest verbleibt;
oder
- Positionieren des aufzuklebenden Körpers und / oder Bauteils (4) und des Klebers auf der strukturierten metallischen Oberfläche (5) und anschließendem Einsetzen des zweiten Werkzeugs (32) in die Werkzeugaufnahme (2) und Anwenden des zweiten Werkzeuges (32) zur Herstellung einer definierten Spaltbreite, Ausrichtung zu der strukturierten metallischen Oberfläche (5) auf ortsfester Position direkt über der vorher strukturierten metallischen Oberfläche (5), wobei die Werkzeugaufnahme (2) mit dem Vakuumhalter (1) ortsfest verbleibt;
- Aushärten und / oder Aushärten lassen des Klebers;
- Entfernen der Klebe-Fügevorrichtung.

9. Verfahren nach dem vorangehenden Anspruch,
**dadurch gekennzeichnet, dass**
das Ätzen mittels nanoscale sculpturing erfolgt.

10. Verfahren nach einem der zwei vorangehenden Ansprüche,
**dadurch gekennzeichnet, dass**
das Auftragen des Klebers mittels einer Kleberauftragshilfe erfolgt
und / oder
das Aushärten des Klebers unter definierten Bedingungen erfolgt, wobei hierzu ein Zuführen einer definierten Wärmemenge und / oder mit einer definierten Temperatur und / oder UV-Beleuchtung erfolgt.

## Claims

1. Adhesive joining device for preparing and/or producing an adhesive connection in an adhesive point and/or adhesive section on a metallic surface (5) to which a body and/or component (4) is to be adhered, and an adhesive by means of an electrochemical etching device, comprising:
- a vacuum holder (1) with a vacuum connection (11), wherein the vacuum can be formed between the adhesive joining device and the surface (5) around the adhesive point and/or adhesive section to be produced;
**characterised in that the** device **further** comprises:
- a tool-changing holder (2) in the centre of the vacuum holder (1) or in the interior of the vacuum holder (1) or on the vacuum holder (1), which receives at least two different tools (31, 32) in a timely offset manner and in a defined position;
- a first tool (31) which can be inserted and used in the tool holder (2) in a time-delayed manner, namely an electrochemical etching cell for an electrolyte, with:
- an etching chamber which is directed towards the metallic surface (5);
- a feed (311) for supplying an electrolyte to the etching chamber, an outlet (312) for discharging the electrolyte from the etching chamber;;
- two electrodes (313, 12) with corresponding electrical contacts, one electrode (12) being mechanically and electrically connected to the metallic surface (5) to be structured and the second electrode (313) coming into contact with the electrolytes,
- a second tool (32) that can be inserted and used with a time offset in the tool holder (2) for holding and positioning the body and/or component to be adhered (4) on the etched metallic surface (5) with a defined position within the tool holder (2), wherein the distance and/or position and/or alignment and/or parallelism of the body (4) to be adhered can be secured and aligned in a defined manner for the adhesion.

2. Adhesive joining device according to claim 1,
**characterised in that**
at least the first tool (31) is adapted in fluidic terms to the metallic surface (5) to be etched with respect to curvature and/or expansion.

3. Adhesive joining device according to one of claims 1 or 2,
**characterised in that**
the first tool (31) that can be inserted and used with a time offset in the tool holder (2) can be used to additionally clean the etched metallic surface (5), wherein correspondingly additional supply and discharge lines for cleaning and/or rinsing fluids and/or the existing feed (311) and the discharge (312) can be switched over for a cleaning and/or rinsing liquid and/or rinsing medium (69).

4. Adhesive joining device according to one of the preceding claims,
**characterised in that**
a third tool is provided for cleaning the etched metallic surface (5) after the etching process, which tool can be inserted and used in the tool holder (2) with a time offset.

5. Adhesive joining device according to one of the preceding claims,
**characterised in that**
a fourth tool is provided for the local deposition of copper on structured aluminium surfaces for the production of at least one electrical contact point, which fourth tool can be inserted and used in the tool holder (2) with a time delay.

6. Adhesive joining device according to one of the preceding claims, **characterised in that**
- at least one vacuum pump (61), which is connected by a line to the vacuum chamber (1) via the vacuum connection (11, 66)
and / or
- at least one electrolyte reservoir (67) for storing an electrolyte
and / or
at least one electrolyte collecting container (68) for receiving the used electrolyte
and / or
- at least one pump (61) for supplying electrolyte to the first tool (31)
and / or
- at least one pump (61) for supplying flushing medium to the first and/or third tool
and / or
- at least one control unit (61) for controlling the device and/or the process is/are provided.

7. Adhesive joining device according to one of the preceding claims,
**characterised in that**
the adhesive joining device is designed to be mobile and/or transportable.

8. Adhesive joining process for a metallic surface using an adhesive joining device according to one of the preceding claims"
**comprising the steps of:**
- selecting the bonding point and positioning and securing the adhesive joining device by means of the vacuum holder (1) by creating and maintaining a vacuum;
- inserting the first tool (31) into the tool holder (2) in parallel or in a downstream manner;
- producing a structuring on the metallic surface (5) at the defined position and area by electrochemical etching by means of the first tool (31);
- cleaning and drying the structured metallic surface (5) with the aid of the first tool (31) or a third tool, a tool change being carried out when the third tool is used;
- removal of the tool (31) from the tool holder (2)
- production of an adhesive bond by:
- insertion of the second tool (32) into the tool holder (2) and positioning of the body and/or component (4) to be bonded in the second tool (32) and application of the adhesive to the structured metallic surface (5) and/or the body and/or component (4) and subsequent application of the body and/or component (4) to be bonded by means of the second tool (32) to produce a defined gap width, alignment with the structured metallic surface (5) in a fixed position directly above the previously structured metallic surface (5),
wherein the tool holder (2) with the vacuum holder (1) remaining stationary;
or
- positioning the body and/or component (4) to be adhesively bonded and the adhesive on the structured metallic surface (5) and then inserting the second tool (32) into the tool holder (2) and applying the second tool (32) ) for producing a defined gap width, alignment with the structured metallic surface (5) in a fixed position directly above the previously structured metallic surface (5), the tool holder (2) with the vacuum holder (1) remaining fixed;
- curing and/or allowing the adhesive to cure;
- removing the adhesive joining device.

9. A method according to the preceding claim,
**characterised in that**
the etching is carried out by means of nanoscale sculpturing.

10. A method according to one of the two preceding claims,
**characterised in that**
the adhesive is applied by means of an adhesive application aid
and/or
the adhesive is cured under defined conditions, wherein a defined amount of heat and/or
at a defined temperature and/or UV illumination is supplied for this purpose.

## Revendications

1. Dispositif d'assemblage par collage pour la préparation et / ou la réalisation d'un assemblage par collage dans un point de collage et / ou une section de collage sur une surface métallique (5) avec un corps et / ou un composant (4) à coller dessus et un adhésif au moyen d'un dispositif de gravure électrochimique présentant:
- un support à vide (1) avec une connexion à vide (11), le vide pouvant être formé entre le dispositif d'assemblage par collage et la surface (5) autour du point de collage et/ou de la section de collage à réaliser;
**caractérisé en ce que le dispositif comprend en outre:**
- un logement de changement d'outil (2) recevant au moins deux outils différents (31, 32) de manière décalée dans le temps et ceux-ci dans une position définie, au centre du support à vide (1) ou dans l'espace intérieur du support à vide (1) ou sur le support à vide (1);
- un premier outil (31) pouvant être mis en place et utilisé de manière décalée dans le temps dans le logement d'outil (2), à savoir une cellule de gravure électrochimique pour un électrolyte avec:
- une chambre de gravure orientée vers la surface métallique (5);
- une arrivée (311) d'électrolyte dans la chambre de gravure, une sortie (312) de la chambre de gravure;
- deux électrodes (313, 12) avec des contacts électriques associés, l'une des électrodes (12) étant reliée mécaniquement et électriquement à la surface métallique (5) à structurer et la deuxième électrode (313) établissant un contact avec l'électrolyte,
- un deuxième outil (32) pouvant être mis en place et utilisé de manière décalée dans le temps dans le logement d'outil (2) pour maintenir et positionner le corps et / ou le composant (4) à coller sur la surface métallique gravée (5) avec une position définie à l'intérieur du logement d'outil (2), la distance et / ou la position et / ou l'orientation et / ou le parallélisme du corps (4) à coller pouvant être assurés et alignés de manière définie pour le collage.

2. Dispositif d'assemblage par collage selon la revendication 1,
**caractérisé en ce que**
l'au moins premier outil (31) est adapté, du point de vue de la technique des fluides, à la surface métallique (5) à graver en termes de courbure et/ou de dilatation.

3. Dispositif d'assemblage par collage selon l'une des revendications 1 ou 2,
**caractérisé en ce que**
le premier outil (31) pouvant être mis en place et utilisé de manière décalée dans le temps dans le logement d'outil (2) peut être utilisé en complément pour le nettoyage de la surface métallique gravée (5), des conduites d'alimentation et d'évacuation correspondantes pour les liquides de nettoyage et/ou de rinçage et/ou le fluide de rinçage (69) étant prévues à cet effet en complément et/ou l'alimentation (311) et l'évacuation (312) existantes pouvant être commutées pour un liquide de nettoyage et/ou de rinçage et/ou un fluide de rinçage (69).

4. Dispositif d'assemblage par collage selon l'une des revendications précédentes,
**caractérisé en ce que**
un troisième outil pouvant être inséré et utilisé de manière décalée dans le logement d'outil (2) est prévu pour le nettoyage de la surface métallique gravée (5) après l'opération de gravure.

5. Dispositif d'assemblage par collage selon l'une des revendications précédentes,
**caractérisé en ce que**
un quatrième outil utilisable et pouvant être mis en place de manière décalée dans le temps dans le logement d'outil (2) est prévu pour le dépôt local de cuivre sur des surfaces structurées en aluminium pour la réalisation d'au moins un point de contact électrique.

6. Dispositif d'assemblage par collage selon l'une des revendications précédentes,
**caractérisé en ce que**
- au moins une pompe à vide (61), celle-ci étant reliée à la chambre à vide (1) par la liaison à vide (11, 66),
et/ou
- au moins une réserve d'électrolyte (67) pour le stockage d'un électrolyte
et/ou
- au moins un récipient de collecte d'électrolyte (68) pour recevoir l'électrolyte usé
et/ou
- au moins une pompe (61) pour l'alimentation en électrolyte du premier outil (31) avec un électrolyte
et/ou
- au moins une pompe (61) pour l'alimentation en fluide de rinçage du premier et / ou du troisième outil
et/ou
- au moins une unité de commande (61) pour la commande du dispositif et / ou la commande du procédé
est/sont prévue(s).

7. Dispositif d'assemblage par collage selon l'une des revendications précédentes, **caractérisé en ce que**
le dispositif d'assemblage par collage est conçu pour être mobile et/ou transportable.

8. Procédé d'assemblage par collage pour une surface métallique avec utilisation d'un dispositif d'assemblage par collage selon l'une des revendications précédentes, **comprenant les opérations suivantes:**
- Sélection du point de collage et positionnement et fixation du dispositif d'assemblage par collage au moyen du support à vide (1) en créant et en maintenant un vide;
- insérer le premier outil (31) dans le porte-outil (2) en parallèle ou en aval;
- Création d'une structuration sur la surface métallique (5) à la position et à la surface définies par gravure électrochimique au moyen du premier outil (31);
- Nettoyage et séchage de la surface métallique structurée (5) à l'aide du premier outil (31) ou d'un troisième outil, un changement d'outil étant effectué lors de l'utilisation du troisième outil;
- Retirer l'outil (31) du porte-outil (2)
- Réalisation d'un collage par:
- Insertion du deuxième outil (32) dans le logement d'outil (2) et positionnement du corps et / ou du composant (4) à coller dans le deuxième outil (32) et application de la colle sur la surface métallique structurée (5) et / ou sur le corps et / ou le composant (4) et ensuite application du corps et / ou du composant (4) à coller au moyen du deuxième outil (32) pour réaliser une largeur de fente définie, orientation vers la surface métallique structurée (5) sur une position fixe directement au-dessus de la surface métallique (5) précédemment structurée,
le porte-outil (2) avec le support à vide (1) restant fixe;
ou
- positionnement du corps et/ou du composant (4) à coller et de la colle sur la surface métallique structurée (5), puis insertion du deuxième outil (32) dans le porte-outil (2) et application du deuxième outil (32) pour la réalisation d'une largeur de fente définie, orientation vers la surface métallique structurée (5) sur une position fixe directement au-dessus de la surface métallique structurée (5) précédente, le porte-outil (2) avec le support à vide (1) restant fixe;
- Durcir et/ou laisser durcir la colle;
- Retirer le dispositif d'assemblage par collage.

9. Procédé selon la revendication précédente,
**caractérisé en ce que**
la gravure est réalisée par nanoscale sculpturing.

10. Procédé selon l'une des deux revendications précédentes,
**caractérisé en ce que**
l'application de la colle s'effectue au moyen d'une aide à l'application de la colle et / ou le durcissement de la colle s'effectue dans des conditions définies, un apport d'une quantité définie de chaleur et / ou à une température définie et / ou un éclairage UV étant effectué à cet effet.
